(19) Europäisches Patentamt
European Patent Office
Office européen des brevets

(11) EP 2 386 902 A2

(12) EUROPEAN PATENT APPLICATION

(43) Date of publication:
16.11.2011 Bulletin 2011/46

(51) Int Cl.:
*G02F 1/13357* (2006.01)

(21) Application number: 11164178.3

(22) Date of filing: 28.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.05.2010 JP 2010112496

(71) Applicant: Sony Corporation
Tokyo 108-0075 (JP)

(72) Inventor: Furukawa, Norimasa
Minato-ku, Tokyo 108-0075 (JP)

(74) Representative: Horner, David Richard
D Young & Co LLP
120 Holborn
London EC1N 2DY (GB)

(54) **Lighting device and image display device**

(57) A lighting device includes: a first light source group having first light sources partitioned into sections and controlled to light for each section; and a second light source group having second light sources partitioned into sections and controlled to light for each section. The second light source has a light distribution different from the first light source. The first and second light source groups are allowed to light independently of each other. The first light sources are arranged in a first array pattern allowing a uniform in-plane-distribution of luminance at a predetermined distance therefrom when whole of the first light source group is under lighting condition. The second light sources are arranged in a second array pattern different from the first array pattern. The second array pattern allows a uniform in-plane-distribution of luminance at the predetermined distance therefrom when whole of the second light source group is under lighting condition.

FIG. 1

**Description**

BACKGROUND OF THE INVENTION

The present invention relates to a lighting device having a plurality of light sources and an image display device displaying an image using light from the lighting device.

In related art, for example, as a light source of a backlight in a liquid crystal display, a light source using a rod-like fluorescent tube such as CCFL (Cold Cathode Fluorescent Lamp) or the like is known. Further, there is known a direct-lighting backlight in which multiple point light sources such as LED (Light Emitting Diode) are arranged in a planar manner.

In particular, recently, as a system of the direct-lighting backlight using the LED, a partitioning drive system has been developed. In this system, a light-emitting surface is partitioned into a plurality of partitioning light-emitting regions, and light emissions of the partitioning light-emitting regions are controlled independently of each other. In a liquid crystal display using the backlight employing this partitioning drive system, luminance of the backlight may be partially changed according to a displayed image.

However, the direct-lighting backlight employing the partitioning drive system has such a property that when, for example, only one partitioning light-emitting region is locally lit, it is difficult to sufficiently obtain the luminance necessary for image reproduction. For example, when attention is focused on a particular display region, in a case in which the light sources are lit over the entire surface, necessary luminance is obtained by not only the light from one partitioning light-emitting region, but the addition of the light from the light sources around this area. On the other hand, in a case in which only one partitioning light-emitting region is locally lit, the addition of the light from the neighboring light sources is absent, and thereby the luminance decreases. Further, generally, a light diffuser is disposed on the top surface of the backlight. However, because this light diffuser diffuses the light, even a part directly above the light emitting source has an emission distribution shape with spread like a hazy moon having the center on the light emitting source. In this way, in the backlight in the past, it is difficult to locally light only one partitioning light-emitting region, in a state in which luminance is sufficient and the unnecessary spread of light is suppressed.

Incidentally, Japanese Unexamined Patent Application Publication Nos. 2007-141737 and 2008-97896 each disclose a technique that uses LED for correction to expand a color reproduction range. However, the techniques described in these documents are not the backlights employing the partitioning drive system and do not correct a local (positional) emission distribution. These techniques are strictly for correcting the light of specific color (frequency) components whose luminance is short over the entire surface.

In view of the foregoing, it is desirable to provide a lighting device and an image display device that may obtain sufficient luminance locally and suppress the unnecessary spread of light locally, with a small number of light source elements, even when the light sources are locally lit.

SUMMARY OF THE INVENTION

According to a first aspect of the present invention, there is provided a lighting device including: a first light source group having a plurality of first light sources which are partitioned into a plurality of sections and are controlled to light for each of the sections; and a second light source group having a plurality of second light sources which are partitioned into the plurality of sections and are controlled to light for each of the sections, each of second light sources having a light distribution different from that of each of the first light sources. The first and second light source groups are allowed to light independently of each other, and also allowed to light concurrently. Further, the plurality of first light sources are arranged in a first array pattern which allows a uniform in-plane-distribution of luminance along a plane located at a predetermined distance therefrom when whole of the first light source group is under lighting condition, and the plurality of second light sources are arranged in a second array pattern different from the first array pattern, the second array pattern allowing a uniform in-plane-distribution of luminance along the plane located at the predetermined distance therefrom when whole of the second light source group is under lighting condition.

According to a second aspect of the present invention, there is provided an image display device including: a display panel that performs image display; and a backlight that emits light for image display toward the display panel, and includes the lighting device according to the first aspect of the present invention used as the backlight.

In the lighting device according to embodiments of the present invention, by the first light source group and the second light source group having the light sources arranged in the array patterns different from each other, luminance distribution patterns different from each other are obtained for each of the predetermined sections. Therefore, by using the first light source group and the second light source group complementarily to each other, lighting control is performed in a complexly linked manner, so that locally sufficient luminance is obtained even when the light sources are locally lit. Further, lighting control of suppressing the unnecessary spread of light locally may be performed. Furthermore, by using the mutually different array patterns in a complexly linked manner, there is obtained, for example, a pseudo-effect which is as if the light flux density distribution of the light from the light source is controlled to result in a condensed state and a diffused state by a variable lens.

In the image display device according to embodiments of the present invention, by using the lighting device according to embodiments of the present invention as the backlight, sufficient luminance is obtained while the unnecessary spread of light is suppressed locally and therefore, an image at high resolution may be displayed while power consumption is suppressed.

In the lighting device according to embodiments of the present invention, lighting control of the first light source group and the second light source group having the light sources arranged in the array patterns different from each other is performed for each of the predetermined sections. Therefore, the luminance distribution patterns that vary between the first light source group and the second light source group may be obtained for each of the predetermined sections. These luminance distribution patterns different from each other are used complementarily to each other, and thereby the lighting control of the first light source group and the second light source group is performed in a complexly linked manner, so that locally sufficient luminance is obtained even when the light sources are locally lit. Further, the lighting of suppressing the unnecessary spread of light locally may be performed. Furthermore, these effects may be realized with a small number of light source elements.

In the image display device according to embodiments of the present invention, the lighting device according to embodiments of the present invention is used as the backlight. Therefore, sufficient luminance is obtained while the unnecessary spread of light is suppressed locally. Thanks to this, even when, for example, image display with a partially varying resolution within one screen is carried out, image display with a high resolution may be performed while power consumption is suppressed.

Other and further objects, features and advantages of the invention will appear more fully from the following description.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIG. 1 is a perspective diagram illustrating an example of the entire configuration of a lighting device according to a first embodiment of the present invention;

FIG. 2 is an explanatory diagram illustrating arrangement of the first light sources in the lighting device according to the first embodiment, together with luminance distributions by the first light sources;

FIG. 3 is an explanatory diagram illustrating arrangement of the second light sources in the lighting device according to the first embodiment, together with luminance distributions by the second light sources;

FIG. 4 is an explanatory diagram illustrating arrangement of the first and second light sources in the lighting device according to the first embodiment, together with luminance distributions by the first and second light sources;

FIG. 5A through FIG. 5C are explanatory diagrams schematically illustrating the luminance distribution by the first light source, the luminance distribution by the second light source, and the luminance distribution by the combination of the first light source and the second light source, respectively, in the lighting device according to the first embodiment;

FIG. 6 is an explanatory diagram schematically illustrating a luminance distribution image by the first light source in Part (A), a luminance distribution image by the second light source in Part (B), and a luminance distribution image by the combination of the first light source and the second light source in Part (C), and an example of the image corresponding to the luminance distribution image illustrated in Part (C), in the lighting device according to the first embodiment;

FIG. 7 is an explanatory diagram illustrating arrangement of the first, second and third light sources in a lighting device according to a second embodiment, together with luminance distributions by the first, second and third light sources;

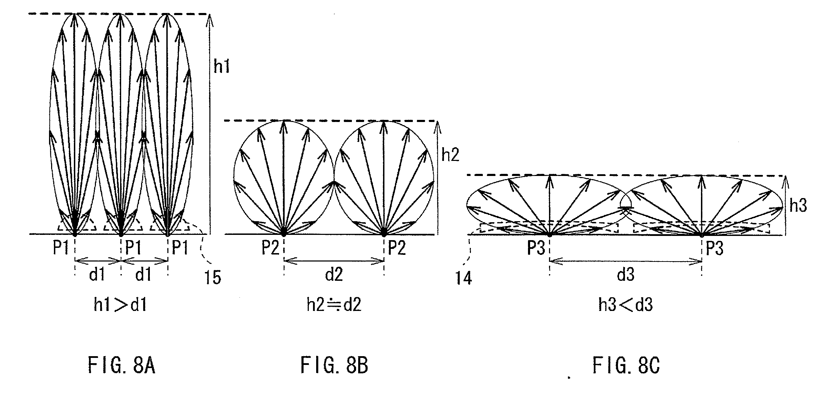

FIG. 8A through FIG. 8C are explanatory diagrams each schematically illustrating a relation between a light source interval to achieve a uniform luminance distribution on a plane at a predetermined distance and a diffused state of rays, i.e., FIG. 8A schematically illustrates a case in which the interval between the light sources and the diffused state of rays are narrow, FIG. 8B schematically illustrates a case in which the interval between the light sources and the diffused state of rays are intermediate, and FIG. 8C schematically illustrates a case in which the interval between the light sources and the diffused state of rays are wide;

FIG. 9A through FIG. 9C are explanatory diagrams schematically illustrating a diffused state of rays by the first light source, and a diffused state of rays by the second light source, and a diffused state of rays by the third light source, respectively, in the lighting device according to the second embodiment;

FIG. 10A and FIG. 10B are explanatory diagrams illustrating a first arrangement example and a second arrangement example, respectively, of light sources in a lighting device according to a third embodiment;

FIG. 11A and FIG. 11B are explanatory diagrams illustrating a third arrangement example and a fourth arrangement example, respectively, of the light sources in the lighting device according to the third embodiment;

FIG. 12A and FIG. 12B are explanatory diagrams illustrating an arrangement example of light sources in a lighting device according to a fourth embodiment;

FIG. 13 is an explanatory diagram illustrating an arrangement example of light sources in a lighting device according to a fifth embodiment;

FIG. 14A and FIG. 14B are explanatory diagrams illustrating a first example and a second example, respectively, of the light source interval in the arrangement example of the light sources illustrated in FIG. 13;

FIG. 15 is a block diagram illustrating a configurational example of an image display device according to a sixth embodiment;

FIG. 16 is a flowchart illustrating an example of lighting control of a backlight in the image display device according to the sixth embodiment;

FIG. 17 is a flowchart illustrating an example of lighting control of a backlight in an image display device according to a seventh embodiment;

FIG. 18 is a flowchart illustrating an example of level distribution processing to each light source group in lighting control processing illustrated in FIG. 17; and

FIG. 19A and FIG. 19B are explanatory diagrams illustrating an example of a signal level of a light source group A, and an example of a signal level of a light source group B, respectively.

DETAILED DESCRIPTION OF THE PREFERRED EMBODIMENTS

Embodiments of the present invention will be described below in detail with reference to the drawings.

<First embodiment>

[Entire configuration of lighting device]

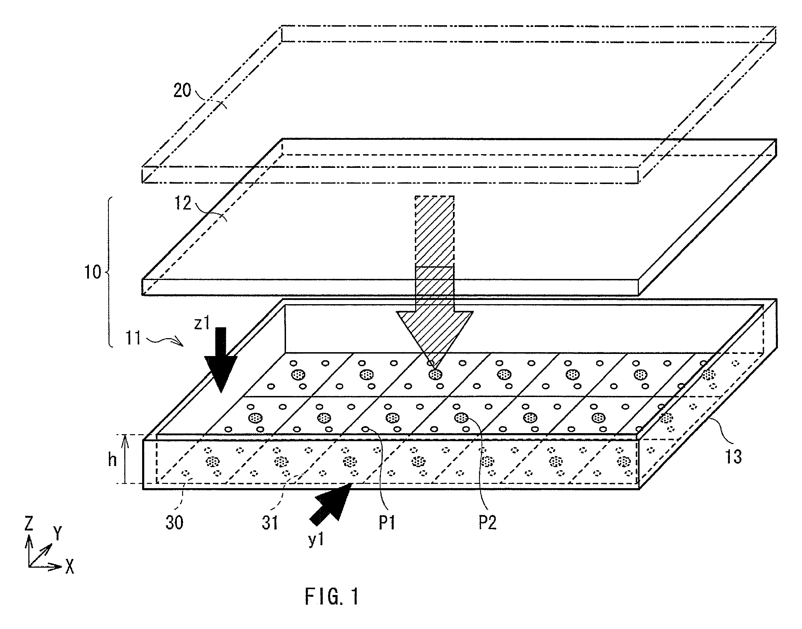

FIG. 1 illustrates a configurational example of the lighting device according to the first embodiment of the present invention. What is illustrated in FIG. 1 is the example of using the lighting device according to an embodiment of the present invention as a backlight 10 of an image display device. In other words, the lighting device according to the present embodiment is disposed on the back surface side of a display panel 20, as the backlight 10 of the image display device, for example. The display panel 20 is, for example, a transmissive liquid-crystal display panel that displays an image by controlling the passing state of light emitted from the backlight 10, with liquid crystal molecules.

The backlight 10 includes a light source section 11 and a diffuser 12. The light source section 11 has a housing 13 shaped like a box. On the bottom of the housing 13, a plurality of first light sources P1 and a plurality of second light sources P2 are arranged two-dimensionally in parallel. The diffuser 12 is disposed on the top surface side of the housing 13 integrally, so as to be at a predetermined distance h from the bottom of the housing 13. The diffuser 12 is provided to diffuse the light from the first light sources P1 and the second light sources P2, thereby equalizing the in-plane luminance distribution for each of predetermined partitioned sections 30.

[Layout configuration of light source]

The plurality of first light sources P1 as a whole configure a first light source group. The plurality of second light sources P2 as a whole configure a second light source group. The first light source group and the second light source group are controlled for each of the predetermined partitioned sections 30. The partitioned sections 30 may not be regions formed by physically providing borders, and may be virtual partitioned sections in terms of control. FIG. 1 illustrates a state in which the partitioned sections are provided by virtual splitting with virtual splitting lines 31.

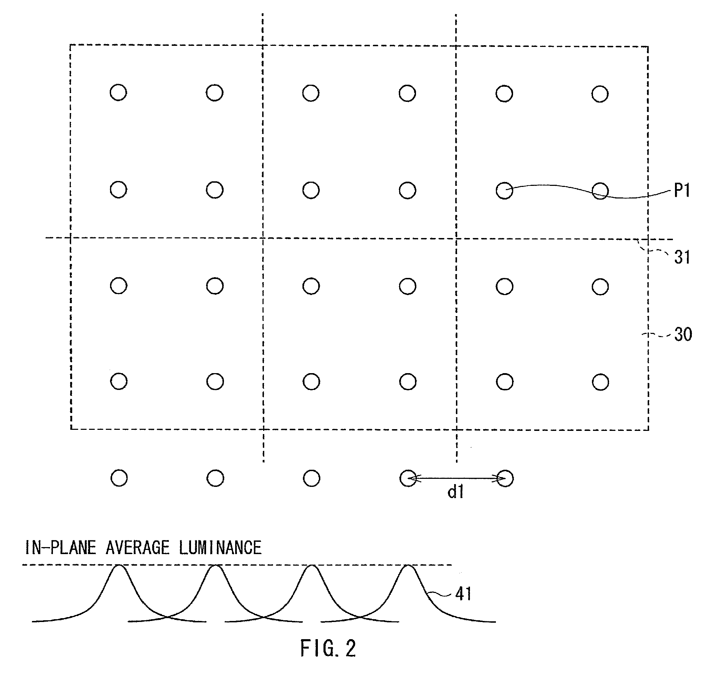

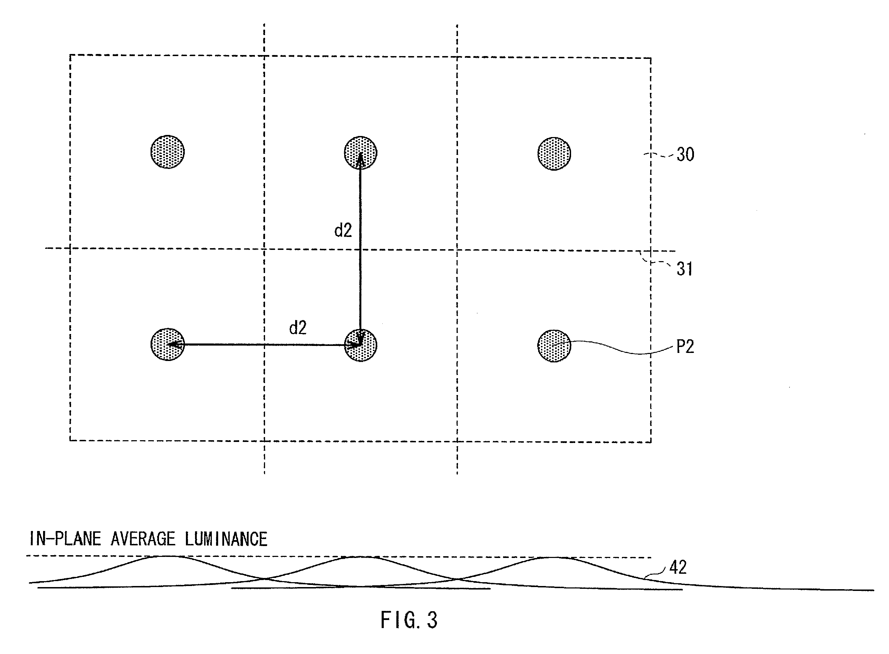

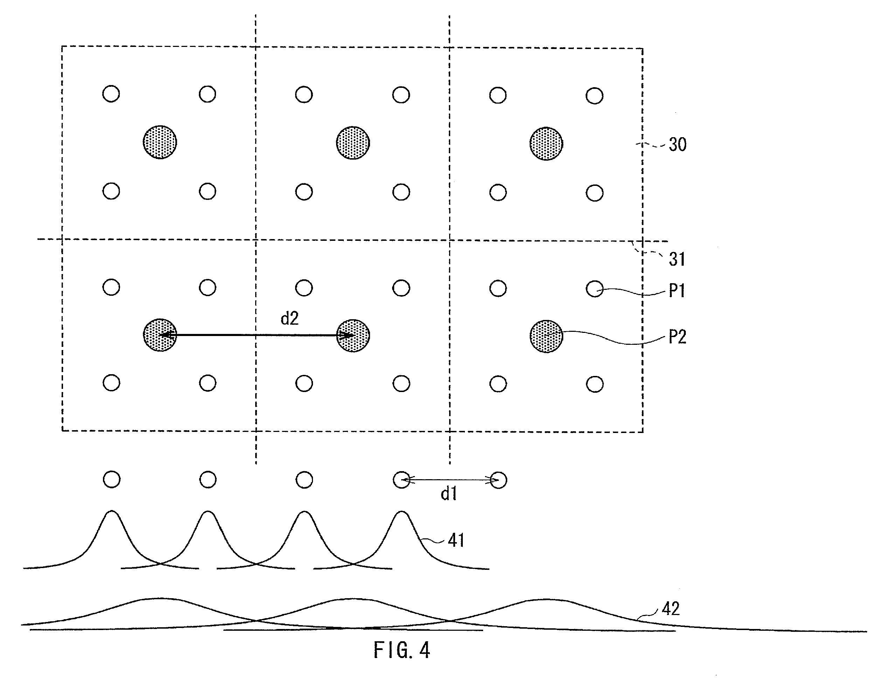

FIG. 2 illustrates an arrangement of the first light sources P1, together with a luminance distribution 41 by the first light source P1. FIG. 3 illustrates an arrangement of the second light sources P2, together with a luminance distribution 42 by the second light source P2. FIG. 4 illustrates the arrangements of the first light sources P1 and the second light sources P2, together with the luminance distribution 41 by the first light source P1 and the luminance distribution 42 by the second light source P2. The luminance distributions 41 and 42 in these figures are distributions schematically illustrated at the predetermined distance h observed from a side-surface direction y1 in FIG. 1 (the surface of the diffuser 12).

The first light source group and the second light source group are capable of being lit independently for each of the predetermined partitioned sections 30. Further, the first light source group and the second light source group are configured to be capable of being both lit at the same time for each of the predetermined partitioned sections 30. The plurality of first light sources P1 are arranged in a first array pattern so that when only the first light source group is lit as a whole, an in-plane luminance distribution at the predetermined distance h becomes uniform. The plurality of second light sources P2 are arranged in a second array pattern different from the first array pattern, so that when only the second light source group is lit as a whole, an in-plane luminance distribution at the predetermined distance h becomes uniform.

The present embodiment is configured such that the array patterns of the first light source P1 and the second light source P2 are optimized and the diffuser 12 is disposed at the predetermined distance h, so that the light flux density of the light emitted from the individual light source elements of the first light source P1 and the second light source P2 is an approximately uniform light flux distribution on a plane at the predetermined distance h.

The plurality of first light sources P1 are spaced approximately evenly at first arrangement intervals d1. The plurality of second light sources P2 is are spaced approximately evenly at second arrangement intervals d2 different from the first arrangement intervals d1. The second arrangement interval d2 is larger than the first arrangement interval d1. The first light source P1 and the second light source P2 are configured to respectively have light distributions different from each other. Specifically, the luminance distribution 41 by one first light source P1 is narrower than the luminance distribution 42 by one second light source P2, in terms of the spread in a horizontal direction (XY directions in FIG. 1). Such a difference in the luminance distribution may be realized by providing a condensing means (e.g., convex lens) or a light diffusion means (e.g., concave lens) on the light outgoing side of the first light source P1 or the second light source P2 as appropriate. For example, such a difference may be realized by providing the condensing means (e.g., convex lens) on the light outgoing side of the first light source P1. Alternatively, the light diffusion means (e.g., concave lens) may be provided on the light outgoing side of the second light source P2.

In the present embodiment, a case in which four first light sources P1 are disposed in one partitioned section 30 is described as an example. However, the number of the first light sources P1 disposed in one partitioned section 30 is not limited to this example and similarly, the number of the second light sources P2 disposed in one partitioned section 30 is not limited to one as in the case illustrated in the figure.

[Operation and effect]

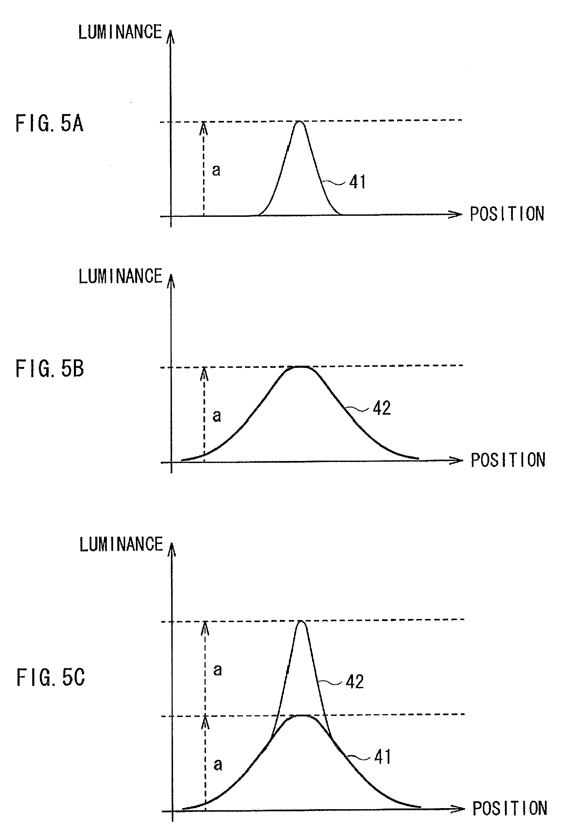

In this lighting device, luminance distribution patterns different from one another are obtained for the respective predetermined partitioned sections 30, by the first light source group and the second light source group where the respective light sources are arranged in the array patterns different from each other. Therefore, by using the first light source group and the second light source group complementarily to each other, lighting control is performed in a complexly linked manner, so that locally sufficient luminance is obtained even when the light sources are locally lit. Further, lighting control of suppressing the unnecessary spread of light locally may be performed. Furthermore, by using the mutually different luminance distribution patterns in a complexly linked manner, there is obtained, for example, a pseudo-effect which is as if the light flux density distribution of the light from the light sources is controlled to result in a condensed state and a diffused state by a variable lens. This concept is illustrated in FIG. 5A through FIG. 5C.

FIG. 5A illustrates the luminance distribution 41 by only the first light source P1, and FIG. 5B illustrates the luminance distribution 42 by the second light source 2. FIG. 5C schematically illustrates the luminance distribution by the combination of the first light source P1 and the second light source P2. As illustrated in FIG. 5C, the combination of the first light source P1 and the second light source P2 may increase the luminance locally, while suppressing the unnecessary spread of light locally.

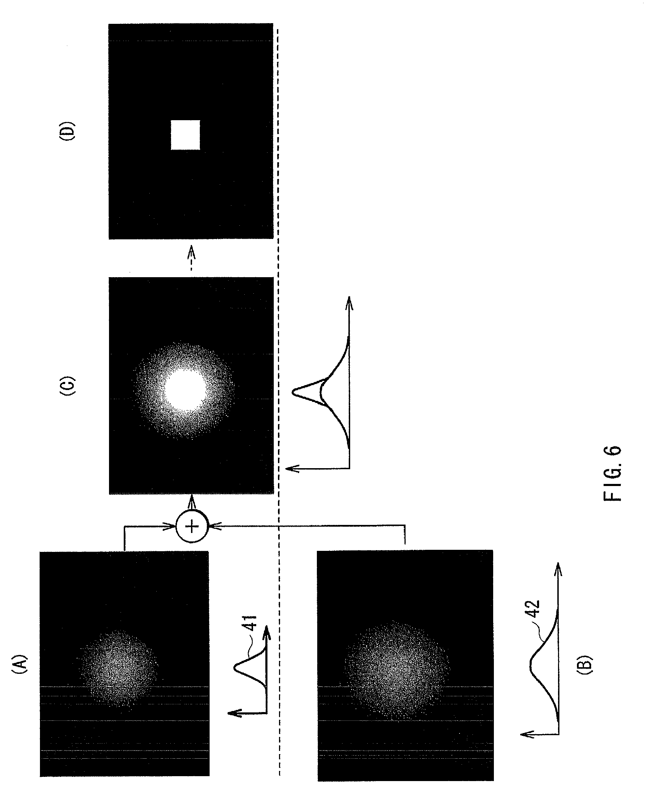

In addition, because sufficient luminance is obtained while the unnecessary spread of light is suppressed locally by using this lighting device as the backlight 10 of the image display device, an image at high resolution may be displayed while power consumption is suppressed. This concept is illustrated in Parts (A) through (D) of FIG. 6.

Part (A) of FIG. 6 illustrates, in a case where this lighting device is used as the backlight 10 of the image display device, an in-plane luminance distribution image at the predetermined distance h when only the first light source P1 in a central area of the screen is caused to emit light. Part (B) of FIG. 6 illustrates an in-plane luminance distribution image at the predetermined distance h when only the second light source P2 in the central area of the screen is caused to emit light. Part (C) of FIG. 6 illustrates an in-plane luminance distribution image at the predetermined distance h when both of the first light source P1 and the second light source P2 in the central area of the screen are caused to emit the light. Combining the first light source P1 and the second light source P2 as illustrated in Part (C) of FIG. 6 may put only the central area of the screen in a state of locally high luminance. As a result, by combining the display panel 20 and the backlight 10, image display of white display in only the central area of the screen as illustrated, for example, in Part (D) of FIG. 6 may be well performed.

[Comparison with backlight in related art]

The operation and effect of the backlight 10 in the present embodiment will be described in comparison with a direct-lighting backlight employing a partitioning drive system in the past. Further, a case of use as a backlight of a transmissive liquid-crystal display panel will be described below by way of example.

In the backlight in the past, lighting of multiple LEDs arranged flat while being spaced at approximately regular intervals is controlled by grouping the LEDs into small regions each including a predetermined quantity (each small group will be hereinafter referred to as a block). The number of pixels of an image displayed in a liquid crystal is very small and thus, lighting segments of the backlight are very coarse, as compared to the number of pixels of the image displayed in the liquid crystal. A backlight of a partial light-quantity adjustment function type, in which the length and breadth are partitioned to be formed like blocks and the amount of light emission in each block is controlled independently, has been put to practical use. Such a backlight is combined with a liquid-crystal display panel to implement an integral display device, thereby contributing to improvement in contrast ratio and reduction in power consumption.

Generally, contrast may be defined as a ratio A/B that is a ratio between the brightest display luminance A and the darkest display luminance B. Before the backlight of the partial light-quantity adjustment function type appears, when a part to be displayed as an image is dark, the crystal cell shutter is controlled in a direction of closing and transmitted light is reduced to reproduce the dark image. However, in the past, the amount of blocking the light of this shutter function has been insufficient and therefore, contrast has not been made high.

Thus, for the purpose of improving the contrast, the control with the use of the backlight of partial light-quantity adjustment function type is proposed. In the control method, when a part to be displayed as an image in the liquid crystal panel is dark, the amount of light emission of blocks of backlight in the position corresponding to the part to be displayed as an image is reduced by dimming and thereby darkness is achieved, and at the same time, control is performed so that the amount of transmitted light of the display panel in the part to be displayed as an image is increased in a direction opposite to the direction of the dimming of the blocks. Therefore, as the entire display device, correction to realize correct reproduction of the brightness (darkness) to be originally displayed is performed, and thereby intended image display luminance is obtained. Physical meaning of such operation is to compensate the insufficient blocking ability of the liquid crystal shutter by reducing the illumination luminance. In other words, the light-quantity control function of the light sources themselves bears part of the display function of the liquid crystal panel. That is, the dark state is displayed by not only the shutter function of the liquid crystal panel but also the dimming function of the backlight that may be regarded as a self-luminous display body, and the shutter function and the dimming function cooperate to share the burden, and thereby a desired image display luminance is reproduced. Note that, the number of partitioned blocks of backlight is generally small compared to the pixel of the liquid crystal display panel, so the space frequency of the partitioned block is low.

As for the case of such a backlight employing the partitioning drive system in the past, in a display device mounted with this backlight, generally, there is such a property that when only one local block of the backlight partitioned for local lighting is lit, it is difficult to obtain the luminance necessary for correct image reproduction, due to an optical physical property.

In a general backlight that does not employ the partitioning drive system, local lighting and dimming of the light emitting sources are not performed. In other words, this backlight corresponds to a case in which all the light emitting sources are lit simultaneously. In this case, when attention is focused on a specific point on a plane, illumination is provided not only by the light of a part on its back surface, but the brightness of the specific point is determined, based on integration of the light from all the surroundings of the specific point, such as the light added upon reaching after emitted by the light sources disposed around the back surface and an added component by the arrival of the light from outside farther than the surroundings.

On the other hand, in the backlight employing the partitioning drive system, the source of luminance is a diffusing light source and thus, when a special condensing lens or the like is not provided, the light exhibits a light distribution shape spread like a hazy moon having the center on the light emitting source. For this reason, the light scatters toward the surroundings of the light source and thereby a central part immediately above the source of luminance and originally closest to the source of luminance does not become bright on the surface of the diffuser, as compared to the case where all the sources of luminance are lit. Because of such a principle, in the backlight employing the partitioning drive system, in a local lighting state in which only a specific point aimed at is lit and the surroundings of this point is not lit, if only the back surface of this particular (local) point is lit, a light quantity component from the surroundings is not obtained, which results in darkness.

Usually, when dotted LEDs are assumed to be point light sources (Lambertian source) emitting diffused light individually, the luminance ratio at the time of local lighting with respect to the overall lighting is in a level of falling within a range of about 0.2 to 0.5 experimentally. This luminance ratio will not be 1.0, unless special operation such as putting the display panel in contact with the light source is performed. Therefore, in the backlight employing the partitioning drive system in the past, the brightness is insufficient for a normal light distribution state that is achieved when only one certain block is lit. When attention is paid to a certain particular image point, this point is not sufficiently lit by lighting on the back surface of this point by an ordinary way of lighting the block.

Further, the light spreads and thus has a region referred to as a spread range.

When this spread range is wide, the following disadvantage arises. For example, in particular, the description will be provided by using, as a specific example of an image that is "a certain particular image point desired to have luminance," an image that is a window signal in which a certain particular circular range is assumed to be 100% white and its surroundings are displayed as black (see Part (D) of FIG. 6). The correct display form of this signal is desired to be black display in its surroundings, but results in a state in which due to the physical property referred to as the above-mentioned spread of the light, unnecessary light spreads and reaches points which are located around the 100% white range and in which brightness is undesired. Moreover, in the part where 100% white display is desired, the amount of light is short.

In the backlight 10 of the present embodiment, for the part where 100% white display is desired, compensation for the shortage of the amount of light and effective suppression of the unnecessary spread of light may be realized at the same time with a small number of light source elements.

Incidentally, as a method of obtaining desired luminance for the part where 100% white display is necessary, the following representative method is conceivable. Of course there are other methods, but here, the description will be limited to a minimum for convenience of explanation.

1. In order to focus the light on only a desired point, a condensing means such as a lens is used and thereby an emission distribution of the emitted illuminating light is physically corrected, so that the emission distribution of the light is formed like a beam.

According to this method, the light is focused to realize the light emission near only the light sources themselves and as a result, optical crosstalk that is a crossover of light in adjacent locations may be reduced. Thus, although in a direction of avoiding mixture of light, the method of forming the emission distribution of the light like a beam is performed without changing the distance between the positions of the adjacent light sources (hereinafter referred to as a pitch), a luminance distribution where only a part near the light source has a luminance peak like a spot is formed on the diffuser, so that a uniform luminance distribution as a whole is not obtained. Since this is apparent, in order to obtain a uniform luminance distribution by using the light sources whose light is focused in this way, the pitch is desired to be reduced and the layout of point light sources is desired to be denser. On the other hand, there is no such a convenient story that the area (display area) to be illuminated is reduced in proportion to the denser layout of the light sources and therefore, uniformity and smoothness of the light-emitting surface may not be achieved unless the number of LEDs is greatly increased. In this method, the necessary number of LEDs is extremely increased, and the thickness is not reduced, and therefore, this method is not carried out in terms of cost.

2. As another method similar to the above item 1, there is a method of providing partitions such as walls to define each block.

In this method, the course of light may be forcibly restricted, and a particular range may be illuminated by narrowing the range defined by block walls and therefore, mixture of light in adjust blocks may be reduced. However, the border between the blocks is made clear, and robustness against misalignment in superposition of display positions with respect to the liquid crystal display side that is an image display device is impaired, which causes malfunction. This method provides such an undesired condition hard to evade in mass production and thus is difficult to carry out.

3. The emission distribution of each of the light source elements remains as Lambert (perfectly diffusing), and a large number of light sources are used, without providing a lens like the one mentioned in the above item 1, and without processing the emission distribution.

According to this method, the luminance is increased by the number of the light sources used, and the pitch is reduced naturally, leading to a thin form. However, the number of LEDs to be used is increased and thus, it is difficult to avoid an increase in cost.

4. A part where desired luminance is to be achieved is lighted, and blocks around the part are also lighted so that an effect of adding the light coming from the surroundings is produced, and thereby an effect of increasing the luminance in the part where the luminance is desired is achieved and used.

According to this method, even if a region where the luminance is actually desired is small, several blocks in a large region are concurrently lit, on the backlight side. This operation is far from the local lighting that is a lighting state originally desired.

5. For the emission distribution of each of the light source elements, without providing a lens like the one mentioned in the above item 1, no processing is provided and the number of light sources is not increased, but instead, electric power supplied to one light source is increased to use the light source with more brightness.

This is a method to be performed most easily. However, the electric power that may be supplied to each light source is limited by a specification of the device and thus, the electric power to feed is limited, making it hard to increase the brightness. Suppose there is no limit in the electric power to feed, and in such a case, when the power is fed until desired brightness is achieved, the luminance in a part where the desired brightness is achieved increases, but the light spreads similarly and thus, an illumination region spreads to a great extent.

The backlight 10 of the present embodiment has been proposed, in view of the situations described in the above items 1 through 5, in particular, by focusing on the situations described in the above items 4 and 5. In such a situation that the number of light sources to be used is limited because of realistic constrains in terms of cost, the backlight 10 of the present embodiment prevents such a state that the lighting is not local as in the cases described in the above items 4 and 5. Further, the backlight 10 of the present embodiment is allowed to effectively illuminate portions to be illuminated, while preventing the spread (sprawling) of light.

The backlight 10 of the present embodiment may obtain a pseudo lens effect which is as if the light flux density distribution of the light from the light source is controlled between the condensed state and the diffused state by a variable lens. In this backlight 10, the plurality of light sources different in spatial light-emission range and intensity are caused to emit light by being distinguished according to the type of light-source arrangement pitch, and they are combined, so that the ultimate luminance distribution is obtained. The first light source P1 and the second light source P2 employing the independent partitioning drive system are combined, and their lighting levels are changed, so that a light-quantity distribution effect like control between the condensed state and the diffused state by a lens may be obtained (see FIG. 5C).

As described above, according to the lighting device of the present embodiment, the lighting of the first light source group and the second light source group whose array patterns of the light sources are different from each are controlled for each of the predetermined partitioned sections 30. Therefore, the luminance distribution patterns varying between the first light source group and the second light source group may be obtained for each of the predetermined partitioned sections 30. The luminance distribution patterns different from each other are used complementarily to each other and thereby the lighting of the first light source group and the second light source group is controlled in a complexly linked manner, so that locally sufficient luminance may be obtained even when the light sources are lit locally. Further, lighting that suppresses the unnecessary spread of light locally may be performed.

In the image display device according to the present embodiment, the lighting device according to the present embodiment is used as the backlight 10 and thus, the unnecessary spread of light is suppressed locally and also sufficient luminance may be obtained. As a result, even when, for example, image display with a partially varying resolution within one screen is carried out, image display with a high resolution may be performed while power consumption is reduced.

<Second embodiment>

Next, the lighting device according to the second embodiment of the present invention will be described.
The entire configuration of the lighting device in the present embodiment is similar to that in FIG. 1. However, in the lighting device of the present embodiment, within the light source section 11 serving as the backlight 10, in addition to the first light sources P1 and the second light sources P2, a plurality of third light sources P3 are arranged two-dimensionally in parallel.

[Layout configuration of light sources]

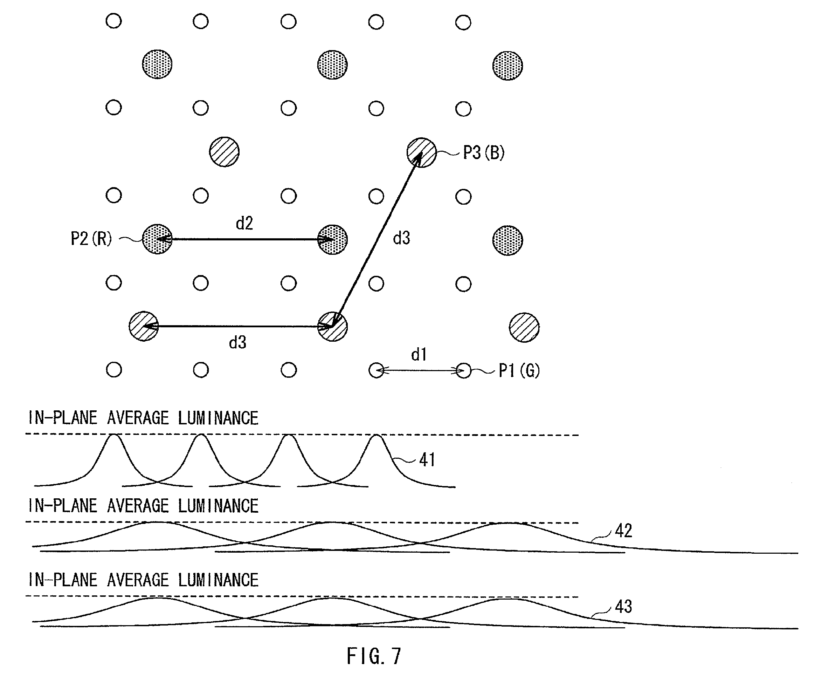

FIG. 7 illustrates the layout of the first light sources P1, the second light sources P2 and the third light sources P3, together with the luminance distribution 41 by the first light source P1, the luminance distribution 42 by and the second light source P2 and a luminance distribution 43 by the third light source P3. Each of these luminance distributions 41, 42 and 43 is a schematically illustrated luminance distribution at the predetermined distance h (the surface of the diffuser 12) observed from the side-surface direction y1 in FIG. 1.

The plurality of third light sources P3 as a whole configure a third light source group. The lighting of the third light source group is controlled for each of the predetermined partitioned sections 30, in a manner similar to the first light source group and the second light source group. In the present embodiment, three light source groups made up of the first through third light source groups in total are configured to be lit at the same time for each of the predetermined partitioned sections 30. The plurality of third light sources P3 are arranged in a third array pattern, so that the in-plane luminance distribution at the predetermined distance h when only the third light source group is lit becomes uniform.

In the present embodiment, the array patterns of the first light source P1, the second light source P2 and the third light source P3 are optimized, and the diffuser 12 is disposed at the predetermined distance h, so that the light flux density of the light emitted from the individual light source elements of the first light source P1, the second light source P2 and the third light source P3 becomes an approximately uniform flux distribution on a plane at the predetermined distance h.

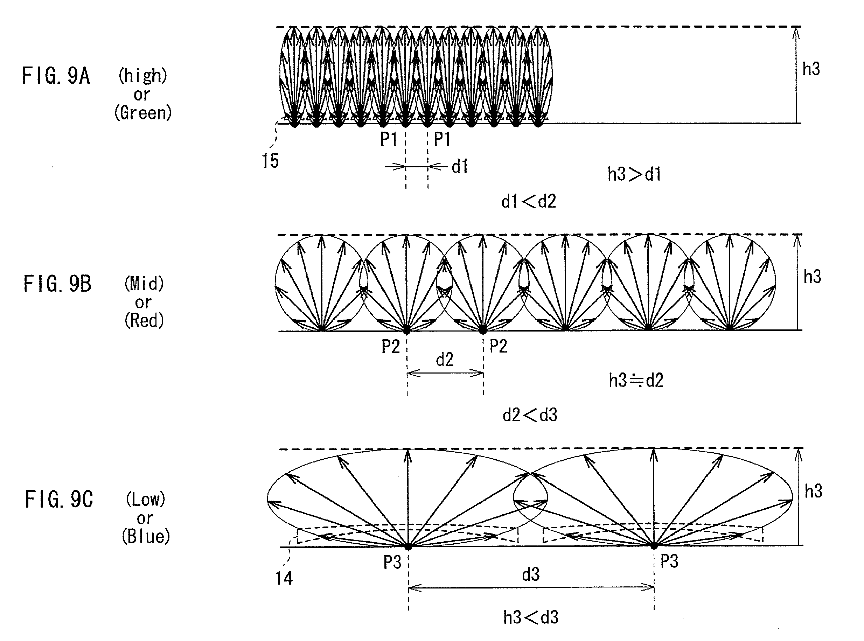

The plurality of third light sources P3 are spaced approximately evenly at third arrangement intervals d3 different from the first arrangement intervals d1 and the second arrangement intervals d2. The third arrangement interval d3 is larger than the second arrangement interval d2. The first light sources P1, the second light sources P2 and the third light sources P3 are arranged to have mutually different light distributions.
Specifically, the luminance distribution 41 by one first light source P1 is narrower than the luminance distribution 42 by one second light source P2 in terms of spread in the horizontal direction (XY directions in FIG. 1). Furthermore, the luminance distribution 43 by one third light source P3 is wider than the luminance distribution 42 by one second light source P2, in terms of spread in the horizontal direction (XY directions in FIG. 1). In order to realize such luminance distributions, a condensing means (convex lens 15) to condense the light is disposed on the light outgoing side of the first light source P1 as illustrated in FIG. 9A. In addition, a light diffusion means (concave lens 14) is disposed on the light outgoing side of the third light source P3 as illustrated in FIG. 9C.

FIG. 9A schematically illustrates a diffused state of rays by the first light source P1, and FIG. 9B schematically illustrates a diffused state of rays by the second light source P2, and FIG. 9C schematically illustrates a diffused state of rays by the third light source P3. Here, the predetermined distance h is h3.

FIG. 8A through FIG. 8C schematically illustrate a relation between the light source interval to achieve a uniform luminance distribution on the plane at the predetermined distance and the diffused state of rays. FIG. 8A schematically illustrates a case in which the interval between the light sources and the diffused state of rays are narrow. FIG. 8B schematically illustrates a case in which the interval between the light sources and the diffused state of rays are intermediate. FIG. 8C schematically illustrates a case in which the interval between the light sources and the diffused state of rays are wide. FIG. 8A through FIG. 8C illustrate the states where the distances h to obtain a uniform luminance distribution vary among the intervals between the light sources. Meanwhile, the states illustrated in FIG. 9A through FIG. 9C correspond to the states in FIG. 8A through FIG. 8C when the respective distances are normalized to be the same distance h3, respectively. In FIG. 8A through FIG. 8C and FIG. 9A through FIG. 9C, the intensity of the light emitted by the light sources is observed from every spatial direction and drawn.

In the case of a state in which the light is condensed by the convex lens 15 or the like and the interval between the light sources is the first arrangement interval d1 that is narrow as illustrated in FIG. 8A (in the case of a light distribution in which the light in the vertical direction is strong and the light in a direction toward the surroundings is weak), at the distance h1 where h1 > d1, a uniform in-plane luminance distribution is obtained.

Further, in the case of a state in which the interval between the light sources is the second arrangement interval d2 and the emitted light may be regarded as perfectly diffused light (Lambert or Lambertian) as illustrated in FIG. 8B (in a case of a light distribution in which the light in the vertical direction and the light in a direction toward the surroundings are the same in intensity), at the distance h2 where h2 = d2, a uniform in-plane luminance distribution is obtained.

Furthermore, in the case of a state in which the interval between the light sources is the third arrangement interval d3 and the light is diffused by the concave lens 14 or the like as illustrated in FIG. 8C (in the case of a light distribution in which the light in the vertical direction is weak and the light in a direction toward the surroundings is strong), at the distance h3 where h3 < d3, a uniform in-plane luminance distribution is obtained.

By taking the relations as in FIG. 8A through FIG. 8C into consideration, to make the first light source P1, the second light source P2 and the third light source P3 obtain uniform in-plane luminance distributions at the same distance h3, as illustrated also in FIG. 9A through FIG. 9C, the following relations are desired for the arrangement intervals.

$$h3 > d1$$

$$h3 = d2$$

$$h3 < d3$$

where d1 < d2 < d3

[Example of application to image display device]

When the lighting device according to the present embodiment is used as the backlight 10 of the image display device, for example, the following application methods are conceivable.

As a first method, there is a method of properly using the light source groups to use, according to the spatial frequency of an image displayed in the image display device. In other words, there is performed such lighting control that the higher the spatial frequency of the image is, the larger the amount of light by the first light source P1 with the narrow arrangement interval is, and the lower the spatial frequency of the image is, the larger the amount of light by the third light source P3 with the wide arrangement interval is.

Further, as a second method, there is a method of using the first light source P1, the second light source P2 and the third light source P3 as light sources of different colors. As one of visual characteristics of human being, there is a characteristic in which the resolution of green color is high and, the resolution of blue color is low. By taking this into consideration, for example, the first light source P1 with the narrow arrangement interval is used as a green (Green) light source (FIG. 9A), and the third light source P3 with the wide arrangement interval is used as a blue (Blue) light source (FIG. 9C). Furthermore, the second light source P2 with the intermediate arrangement interval is used a red (Red) light source (FIG. 9B).

[Modification of second embodiment]

Incidentally, the number of light source groups is not limited to three, and a larger number of light source groups may be provided. In this case, for example, it is conceivable to divide the light sources for particular color into a plurality of groups. For example, when four light source groups are provided, it is conceivable to assign one light source group to each of red and blue, and assign two light source groups to green.

<Third embodiment>

Next, the lighting device according to the third embodiment of the present invention will be described. The entire configuration of the lighting device in the present embodiment is similar to that in FIG. 1. However, in the lighting device of the present embodiment, within the light source section 11 serving as the backlight 10, the array pattern of the first light source P1 or the second light source P2 is different.

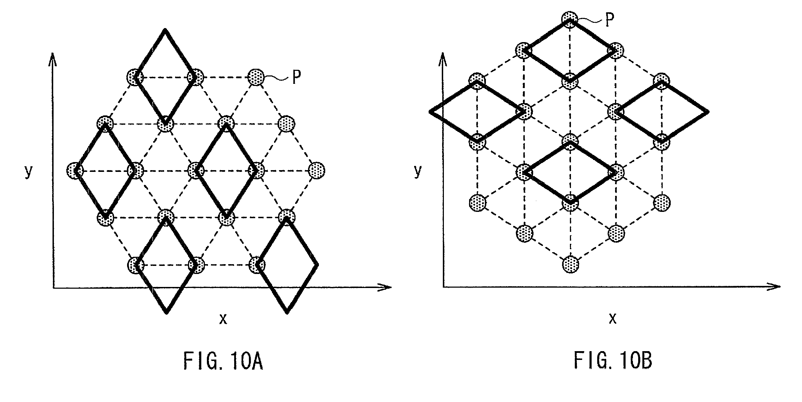

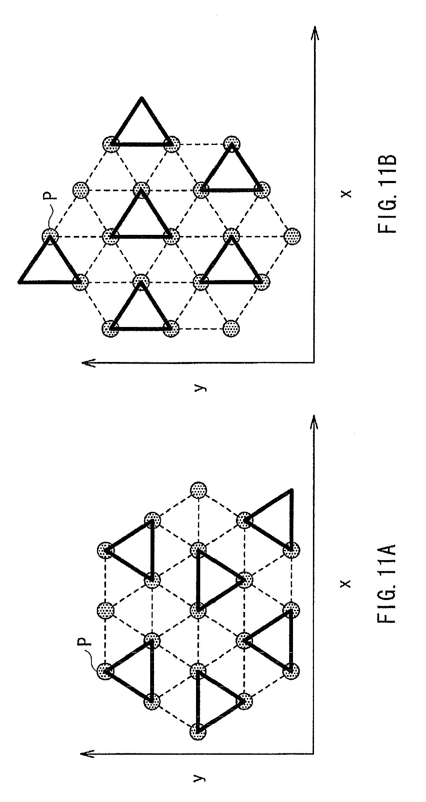

For example, in the first embodiment described above, as illustrated in FIG. 2, in the array pattern within the predetermined partitioned section 30, the first light sources P1 are positioned as if they are at the vertices of an approximately square shape. However, the array pattern of the light sources (in the following, the light sources of an arbitrary light source group will be represented by P) is not limited to such a pattern. FIG. 10A illustrates a first arrangement example of the light sources P, and FIG. 10B illustrates a second arrangement example, in the lighting device according to the present embodiment. In addition, FIG. 11A illustrates a third arrangement example, and FIG. 11B illustrates a fourth arrangement example.

As the array pattern of the light sources P, it is conceivable to use a technique of dividing an arrangement surface into polygons, and disposing the light sources P at physical locations corresponding to the vertices of each polygon. The polygon to be used may be any of a rectangle, a parallelogram, a rhombus, a triangle (a regular triangle, an isosceles triangle etc.), a hexagon and the like, other than the square. FIG. 10A and FIG. 10B each illustrate an example in which the light sources P are disposed at the vertices of the rhombus. FIG. 11A and FIG. 11B each illustrate an example in which the light sources P are disposed at the vertices of the almost regular triangle.

When the array pattern is not a regular polygon, there is a case in which even for the light sources P in the same light source group, the type of the arrangement interval d between the adjacent light sources is not only one, and may be plural. For example, in the case of the isosceles triangle, the base and other two sides are different in length and thus, there are two types of arrangement interval. When there are a plurality of arrangement intervals d between the adjacent light sources as mentioned above, there may be employed such a simple means that an interval dave that is an average of the plurality of arrangement intervals d is made to serve as the arrangement interval of the light sources P in the light source group.

<Fourth embodiment>

Next, the lighting device according to the fourth embodiment of the present invention will be described. The entire configuration of the lighting device in the present embodiment is similar to that in FIG. 1. However, in the lighting device of the present embodiment, within the light source section 11 serving as the backlight 10, the array pattern of the first light source P1 or the second light source P2 is different.

The first light source P1 or the second light source P2 may be a combined light source made up of densely arranged two or more light sources. Further, the plurality of first light sources P1 or the plurality of second light sources P2 may be arranged so that the interval between the emission barycenters of the respective combined light sources is the first arrangement interval d1 or the second arrangement interval d2.

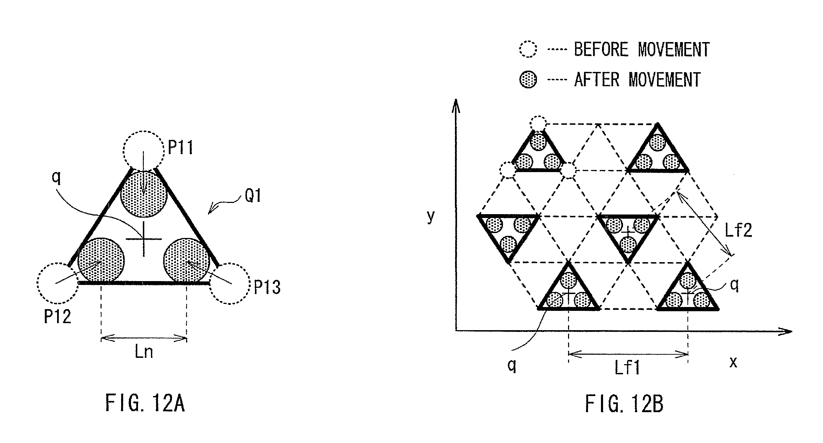

FIG. 12A illustrates an example of such a combined light source. In FIG. 12A, densely arranged three light sources P11, P12 and P13 combined serve as one combined light source. In the present embodiment, such a combined light source is referred to as a "light source cluster" Q1. Further, a mutual distance among the three light sources P11, P 12 and P 13 forming the light source cluster Q1 is Ln. A synthetic emission barycenter in the light source cluster Q1 is regarded as a light source center q.

FIG. 12B illustrates an arrangement example in which a plurality of light source clusters Q1 in FIG. 12A are arranged two-dimensionally. The arrangement is made so that when the mutual distance between the emission barycenters (the light source centers q) of the adjacent light source clusters Q1 is Lf, there is realized, $2Ln < Lf$ and Lf is assumed to be the arrangement interval between the light source clusters Q1. When the mutual distance between the emission barycenters (the light source centers q) becomes a plurality of like Lf1 and Lf2 as illustrated, an average of these distances may be the arrangement interval between the light source clusters Q1.

<Fifth embodiment>

Next, the lighting device according to the fifth embodiment of the present invention will be described. The entire configuration of the lighting device in the present embodiment is similar to that in FIG. 1. However, like the third embodiment described above, in the lighting device of the present embodiment, within the light source section 11 serving as the backlight 10, the array pattern of the first light source P1 or the second light source P2 is different.

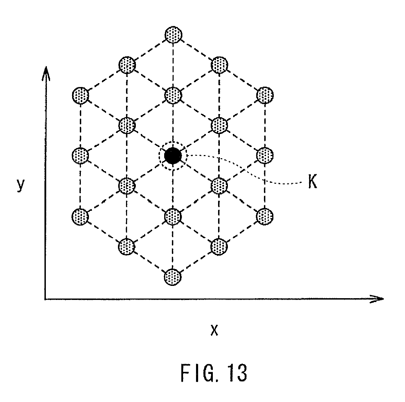

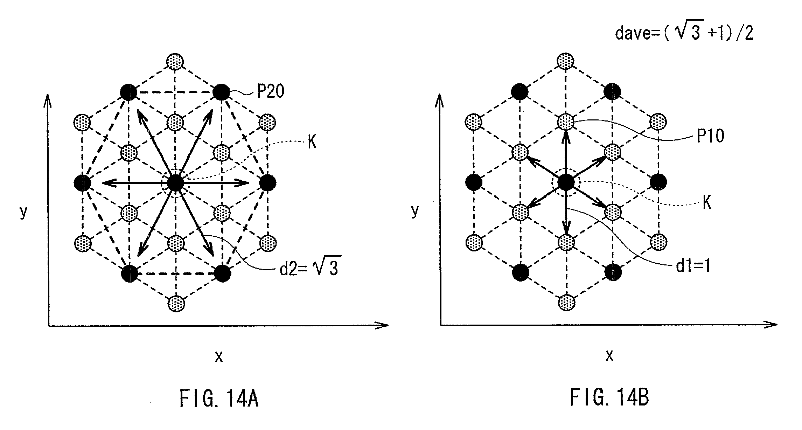

FIG. 13 illustrates an example of the arrangement of the light sources in the lighting device according to the present embodiment. FIG. 14A and FIG. 14B illustrate an arrangement interval between the light sources, by focusing on a central light source K in the example of the arrangement of the light sources illustrated in FIG. 13. In FIG. 14A, each light source P20 is disposed at a position where the arrangement interval is $d2 = \sqrt{3}$ when viewed from the light source K. In FIG. 14B, each light source P10 is disposed at a position where the arrangement interval is $d1 = 1$ when viewed from the light source K. In the case of such a light source arrangement, an average dave = $(\sqrt{3}+1)/2$ of these intervals may be the arrangement interval between the light sources in the light source group.

<Sixth embodiment>

Next, a lighting device according to the sixth embodiment of the present invention will be described. The present embodiment relates to a processing method of the lighting control of the backlight 10 in a case in which the lighting device illustrated in FIG. 1 is used as the backlight 10 of an image display device.

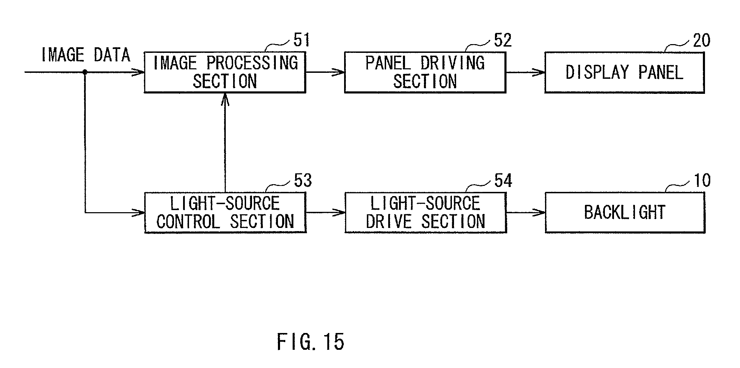

FIG. 15 illustrates a configurational example of a control circuit of the image display device in the present embodiment. This image display device includes an image processing section 51, a panel driving section 52, a light-source control section 53 and a light-source drive section 54. To the image processing section 51 and the light-source control section 53, original image data of an image to be displayed on the display panel 20 is inputted. The light-source control section 53 controls the light-source drive section 54, according to the inputted original image data, and controls the lighting of the light sources (the first light source P1 and the second light source P2) in the backlight 10. The image processing section 51 corrects the inputted original image data based on lighting image data of light sources determined by the light-source control section 53, and performs driving control of the panel driving section 52 so that the image after the correction is displayed on the display panel 20.

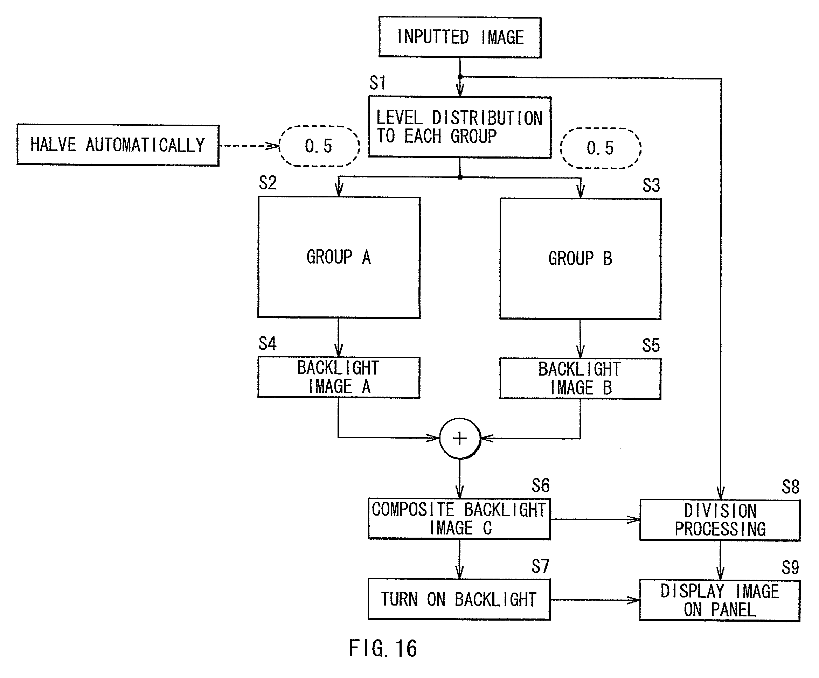

FIG. 16 illustrates an example of the lighting control of the backlight 10 in the image display device according to the present embodiment. In FIG. 16, steps S1 to S7 are processing by the light-source control section 53, a step S8 is processing by the image processing section 51, and a step S9 is processing of the display panel 20.

In FIG. 16, a light source group, which has the light sources having a wide spread range of light and arranged in a coarse array pattern with a long arrangement interval, relatively, is assumed to be A. Further, a light source group, which has the light sources having a narrow spread range of light and arranged in a fine array pattern with a short arrangement interval, relatively, is assumed to be B. The light source group A corresponds to the second light source group in the first embodiment described above. The light source group B corresponds to the first light source group in the first embodiment described above.

Here, as a specification of the light source of the light source group A, maximum permissible input power is assumed to be $W_A$, and as a specification of the light source of light source group B, maximum permissible input power is assumed to be $W_B$. FIG. 16 illustrates the lighting control when a case of $W_A = W_B$ is taken as an example. For this reason, in FIG. 16, the amount of light emission of each light source group is 1:1, so that the mutually same ratio is achieved. In a case where the ratio of electric power controlled and shared in each light source group may be different from those in other light source groups, the amount of light emission may not be necessarily 1:1.

In the lighting control example of FIG. 16, first, the light-source control section 53 distributes a light emission level to each light source group (step S1). Here, the light emission level is simply halved for the light source group A and the light source group B. Incidentally, the processing by this light-source control section 53 is carried out for each of the predetermined partitioned sections 30 according to the inputted image data.

Incidentally, halving the light emission level means as follows. For example, in-plane average luminance in a case where only the light source group A as a whole is lit is assumed to be Xa, and in-plane average luminance in a case where only the light source group B as a whole is lit is assumed to be (1-Xa), and the lighting is performed so that the level of the in-plane average luminance at a predetermined distance h in a case where both of the light source group A and the light source group B are lit concurrently on the whole becomes 1. In this case, in particular, halving the light emission level is equivalent to implementation of the lighting control of the light source group A and the light source group B by assuming Xa = 1/2 where Xa is a fixed value.

In other words, halving the light emission level is equivalent to a case where the amount of light emission of the light source group A is 1/2, the amount of light emission of the light source group B is 1/2, and the total amount of light emission of both groups is 1. The total amount of light emission mentioned here may be proportional to an Average Picture Level (APL) of a full-screen. Use of APL information is one of examples. Peak luminance may be used and thus, there are many choices. In other words, when the size of the original image is assumed to be 1, a synthesis obtained by adding two images of 0.5 times the original image together may be assumed. Therefore, there may be performed such operation that one of the images of 0.5 times is subjected to partitioning-driving backlighting by the light source group A, and the other is subjected to partitioning-driving backlighting by the light source group B. Because the arrangement intervals between the light sources are different, the light source group A and the backlight of B have different spatial light-emission resolutions. Thus, when a light emission pattern is computed and thereby determined for a common image of 0.5 times, the light emission pattern of the light source group A and that of the light source group B are different (steps S2 to S5). Subsequently, a synthetic light-emission pattern (a synthetic backlight image) C resulting from additive synthesis of the light emission pattern by the light source group A and the light emission pattern by the light source group B is determined by, for example, simple addition (step S6). The backlight 10 is lit based on this synthetic light-emission pattern C (step S7).

The image processing section 51 performs processing of dividing the original image based on the synthetic light-emission pattern C (step S8), thereby computing an inversely corrected image for the synthetic light-emission pattern C, and displays the corrected image on the display panel 20 (step S9).

<Seventh embodiment>

Next, a lighting device according to the seventh embodiment of the present invention will be described. The present embodiment relates to a processing method of the lighting control of the backlight 10 in a case where the lighting device illustrated in FIG. 1 is used as the backlight 10 of an image display device. Incidentally, the image display device in the present embodiment has a control circuit (FIG. 15) similar to the above-described sixth embodiment. However, contents of the lighting control by the light-source control section 53 are partially different from the sixth embodiment. Only the part different from the sixth embodiment will be mainly described below.

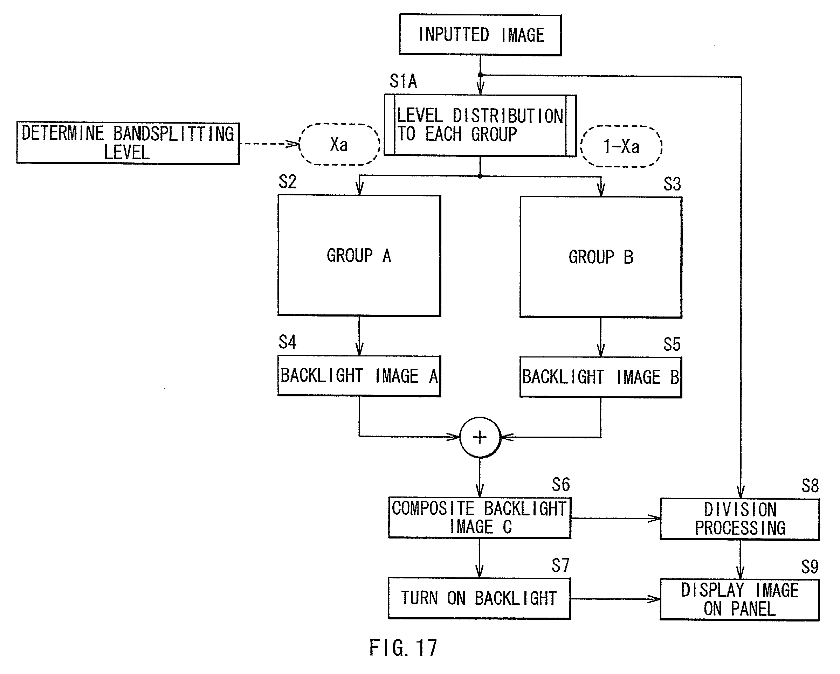

FIG. 17 illustrates an example of the lighting control of the backlight 10 in the image display device according to the present embodiment. What is different from the lighting control in the sixth embodiment illustrated in FIG. 16 is the processing in step S1. In the sixth embodiment, as the processing in step S1, there is performed such control that the light emitting level is simply halved for the light source group A and the light source group B. In contrast, in the present embodiment, the distribution of the light emission level to each light source group is variable (step S1A).

For example, in-plane average luminance in a case where only the light source group A as a whole is lit is assumed to be Xa, and in-plane average luminance in a case where only the light source group B as a whole is lit is assumed to be (1-Xa), and the lighting is performed so that the level of the in-plane average luminance at a predetermined distance h in a case where both of the light source group A and the light source group B are lit concurrently on the whole becomes 1.

In this case, the lighting control of the light source group A and the light source group B is performed by using Xa as a variable value under a condition of 0 < Xa < 1. Xa is caused to vary according to the spatial frequency of an image. In addition, Xa is caused to vary such that the higher the spatial frequency of the image is, the smaller the value of Xa is. This realizes such lighting control that the higher the spatial frequency of the image is, the larger the amount of light by the light source group B (the first light source group) having light sources with a short arrangement interval is, and the lower the spatial frequency of the image is, the smaller the amount of light by the light source group A (the second light source group) having light sources with a long arrangement interval is.

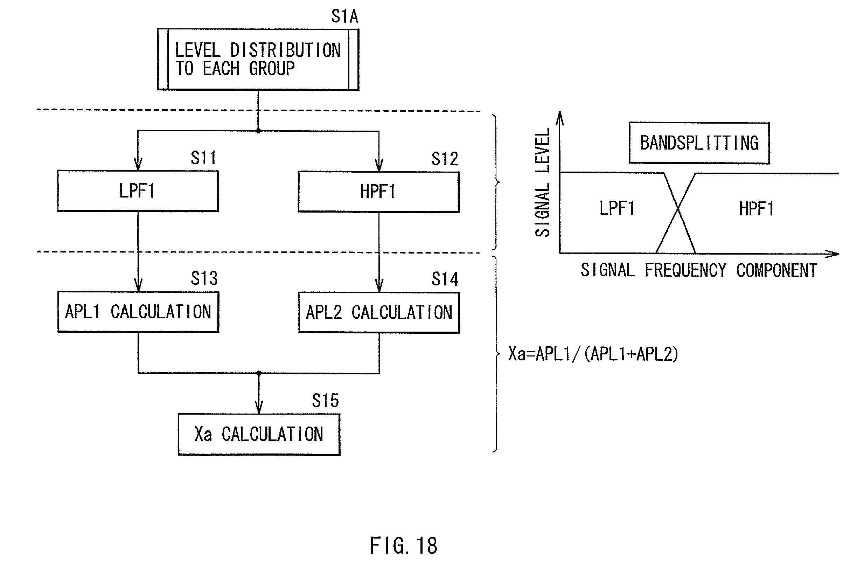

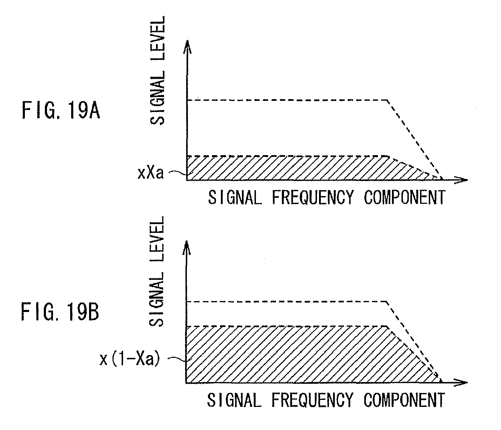

FIG. 18 illustrates an example of level distribution processing (processing of calculating Xa) of distribution to each light source group by such variableness control. Further, FIG. 19A illustrates an example of the signal level of the light source group A and FIG. 19B illustrates an example of the signal level of the light source group B, when such variable control is performed.

As illustrated in FIG. 18, first, lowpass filter processing (step S11) and highpass filter processing (step S12) are performed in parallel for an inputted original image, and bandsplitting of the original image is carried out. A luminance average of a full screen after the lowpass filter processing is performed is assumed to be APL1 (step S13), and a luminance average of the full screen after the highpass filter processing is performed is assumed to be APL2 (step S14). Based on this, for example, Xa is calculated as follows (step S15).

$$Xa = APL1/(APL1 + APL2)$$

The present application contains subject matter related to that disclosed in Japanese Priority Patent Application JP 2010-112496 filed in the Japan Patent Office on May 14, 2010, the entire content of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

CLAUSES

Various aspects of the subject matter described herein are set forth for example, and without limitation, in the following numbered clauses:

1. An image display device comprising:

a display panel that performs image display; and
a backlight that emits light for image display toward the display panel,
wherein the backlight includes
a first light source group having a plurality of first light sources which are partitioned into a plurality of sections and are controlled to light for each of the sections, and
a second light source group having a plurality of second light sources which are partitioned into the plurality of sections and are controlled to light for each of the sections, each of second light sources having a light distribution different from that of each of the first light sources,
the first and second light source groups are allowed to light independently of each other, and also allowed to light concurrently,
the plurality of first light sources are arranged in a first array pattern which allows a uniform in-plane-distribution of luminance along a plane located at a predetermined distance therefrom when whole of the first light source group is under lighting condition, and
the plurality of second light sources are arranged in a second array pattern different from the first array pattern, the second array pattern allowing a uniform in-plane-distribution of luminance along the plane located at the predetermined distance therefrom when whole of the second light source group is under lighting condition.

2. The image display device according to clause 1, wherein
in-plane average luminance at the predetermined distance is assumed Xa when whole of the second light source group is under lighting condition, where $0 < Xa < 1$,
in-plane average luminance at the predetermined distance is assumed $(1-Xa)$ when whole of the first light source group is under lighting condition, and then
in-plane average luminance at the predetermined distance comes to 1 when both of the first and second light source groups are under lighting condition.

3. The image display device according to clause 2, wherein the first and second light source groups are controlled to light through varying the value Xa according to a spatial frequency of an image to be displayed in the image display device.

4. The image display device according to clause 3, wherein an average interval between adjacent first light sources equals to a first arrangement interval, an average interval between adjacent second light sources equals to a second arrangement interval larger than the first arrangement interval, and the first and second light source groups are controlled to light through varying the value of Xa so as to decrease as the spatial frequency of the image increases.

**Claims**

1.  A lighting device comprising:

    a first light source group having a plurality of first light sources which are partitioned into a plurality of sections and are controlled to light for each of the sections; and
    a second light source group having a plurality of second light sources which are partitioned into the plurality of sections and are controlled to light for each of the sections, each of second light sources having a light distribution different from that of each of the first light sources,
wherein the first and second light source groups are allowed to light independently of each other, and also allowed to light concurrently,
the plurality of first light sources are arranged in a first array pattern which allows a uniform in-plane-distribution of luminance along a plane located at a predetermined distance therefrom when whole of the first light source group is under lighting condition, and
the plurality of second light sources are arranged in a second array pattern different from the first array pattern, the second array pattern allowing a uniform in-plane-distribution of luminance along the plane located at the predetermined distance therefrom when whole of the second light source group is under lighting condition.

2.  The lighting device according to claim 1, wherein an average interval between adjacent first light sources equals to a first arrangement interval, and an average interval between adjacent second light sources equals to a second arrangement interval different from that of the first arrangement interval.

3.  The lighting device according to claim 1, wherein the first light sources are spaced uniformly at the first arrangement intervals, and the second light sources are spaced uniformly at the second arrangement intervals different from the first arrangement intervals.

4.  The lighting device according to claim 2, wherein the first light source or the second light source is configured as a combined light source including two or more light sources densely arranged, and an interval between emission barycenters of the combined light sources equals to the first arrangement interval of the first light sources or the second arrangement interval of the second light sources.

5.  The lighting device according to claim 2, wherein an arrangement interval d, of the first light sources or the second light sources or both thereof, satisfies a relation of
    $h > d$,
    where h is the predetermined distance allowing the uniform in-plane distribution of luminance, and a condenser is further provided on a light-outgoing side of the first or second light source or both thereof that satisfy the relation mentioned above.

6.  The lighting device according to claim 2, wherein an arrangement interval d, of the first light sources or the second light sources or both thereof, satisfies a relation of
h>d,
where h is the predetermined distance allowing the uniform in-plane distribution of luminance, and a light diffuser is further provided on a light-outgoing side of the first or second light source or both thereof that satisfy the relation mentioned above.

7. The lighting device according to claim 1, further comprising a third light source group having a plurality of third light sources which are partitioned into the plurality of sections and is controlled to light for each of the sections, each of third light sources having a light distribution different from those of each of the first light sources and each of the second light sources.

8. The lighting device according to claim 7, wherein the first to third light sources emit light of different colors.

9. The lighting device according to claim 1, wherein in-plane average luminance at the predetermined distance is assumed Xa when whole of the second light source group is under lighting condition, where $0 < Xa < 1$,
in-plane average luminance at the predetermined distance is assumed $(1-Xa)$ when whole of the first light source group is under lighting condition, and then
in-plane average luminance at the predetermined distance comes to 1 when both of the first and second light source groups are under lighting condition.

10. The lighting device according to claim 9, wherein the first and second light source groups are controlled to light through setting the value of Xa to a fixed value of 1/2.

11. The lighting device according to claim 9, wherein the first and second light source groups are controlled to light through varying the value of Xa.

12. The lighting device according to claim 11, wherein the lighting device is used as a backlight of an image display device, and
the first and second light source groups are controlled to light through varying the value Xa according to a spatial frequency of an image to be displayed in the image display device.

13. The lighting device according to claim 12, wherein an average interval between adjacent first light sources equals to a first arrangement interval,
an average interval between adjacent second light sources equals to a second arrangement interval larger than the first arrangement interval, and
the first and second light source groups are controlled to light through varying the value of Xa so as to decrease as the spatial frequency of the image increases.

14. The lighting device according to claim 1, further comprising a diffuser disposed at the predetermined distance and diffusing light from the first and second light source groups.

15. An image display device comprising:

a display panel that performs image display; and
a backlight that emits light for image display toward the display panel,
wherein the backlight includes
a first light source group having a plurality of first light sources which are partitioned into a plurality of sections and are controlled to light for each of the sections, and
a second light source group having a plurality of second light sources which are partitioned into the plurality of sections and are controlled to light for each of the sections, each of second light sources having a light distribution different from that of each of the first light sources,
the first and second light source groups are allowed to light independently of each other, and also allowed to light concurrently,
the plurality of first light sources are arranged in a first array pattern which allows a uniform in-plane-distribution of luminance along a plane located at a predetermined distance therefrom when whole of the first light source group is under lighting condition, and
the plurality of second light sources are arranged in a second array pattern different from the first array pattern, the second array pattern allowing a uniform in-plane-distribution of luminance along the plane located at the predetermined distance therefrom when whole of the second light source group is under lighting condition.

FIG. 1

IN-PLANE AVERAGE LUMINANCE

FIG. 2

EP 2 386 902 A2

IN-PLANE AVERAGE LUMINANCE

FIG. 3

EP 2 386 902 A2

FIG. 4

EP 2 386 902 A2

EP 2 386 902 A2

FIG. 5A

FIG. 5B

FIG. 5C

19

FIG. 6

FIG. 7

FIG. 8A
$h1 > d1$

FIG. 8B
$h2 \doteqdot d2$

FIG. 8C
$h3 < d3$

FIG. 9A (high) or (Green)

15

P1 ┊ P1

d1

h3

h3>d1

d1<d2

FIG. 9B (Mid) or (Red)

h3

P2 ┊ P2

d2

h3≒d2

d2<d3

FIG. 9C (Low) or (Blue)

h3

14

P3 ┊ P3

d3

h3<d3

EP 2 386 902 A2

FIG. 10A

FIG. 10B

FIG. 11A

FIG. 11B

FIG. 12B

FIG. 12A

FIG. 13

$$dave=(\sqrt{3}+1)/2$$

FIG. 14A

FIG. 14B

IMAGE DATA

FIG. 15

EP 2 386 902 A2

INPUTTED IMAGE

S1
LEVEL DISTRIBUTION
TO EACH GROUP

HALVE AUTOMATICALLY ----> ( 0.5 )          ( 0.5 )

S2                                          S3

GROUP A          GROUP B

S4                              S5
BACKLIGHT        BACKLIGHT
IMAGE A          IMAGE B

(+)

S6                              S8
COMPOSITE BACKLIGHT  ---->  DIVISION
IMAGE C                     PROCESSING

S7                              S9
TURN ON BACKLIGHT  ---->  DISPLAY IMAGE
                          ON PANEL

FIG. 16

EP 2 386 902 A2

EP 2 386 902 A2

INPUTTED IMAGE

S1A

DETERMINE BANDSPLITTING LEVEL

Xa

LEVEL DISTRIBUTION TO EACH GROUP

1-Xa

S2

GROUP A

S3

GROUP B

S4

BACKLIGHT IMAGE A

S5

BACKLIGHT IMAGE B

+

S6

COMPOSITE BACKLIGHT IMAGE C

S8

DIVISION PROCESSING

S7

TURN ON BACKLIGHT

S9

DISPLAY IMAGE ON PANEL

FIG. 17

EP 2 386 902 A2

FIG. 18

FIG. 19A

FIG. 19B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007141737 A
- JP 2008097896 A
- JP 2010112496 A